# EUROPÄISCHE PATENTANMELDUNG

(11) **EP 4 108 530 A1**
(43) Veröffentlichungstag der Anmeldung: **28.12.2022**
(21) Anmeldenummer: 22179449.8
(22) Anmeldetag: 16.06.2022
(51) Int. Cl.: B60T 13/74, G01L 5/28, G01L 5/22

(54) **VERFAHREN ZUM BESTIMMEN EINER ZUSPANNKRAFT EINER ELEKTRISCHEN BREMSE AUFWEISEND EINEN GLEICHSTROMMOTOR SOWIE KRAFTFAHRZEUG MIT EINER ELEKTRISCHEN BREMSE**

(30) Priorität: 22.06.2021 DE 102021206420
(71) Anmelder: VOLKSWAGEN AG, 38440 Wolfsburg (DE)
(72) Erfinder: Witte, Bastian, 38179 Groß Schwülper (DE)

(57) **Zusammenfassung**

Die Erfindung betrifft ein Verfahren zum Bestimmen einer Zuspannkraft (64) einer elektrischen Bremse (12). Die elektrische Bremse (12) beinhaltet einen Gleichstrommotor (20) und wird in einem Kraftfahrzeug (10) eingesetzt. Zunächst wird ein Stromstärke-Signal (40) des Gleichstrommotors (20) mit einer Abtastfrequenz von mindestens 2 Kilohertz gemessen. Ein erstes Nutzsignal (41) wird durch Hochpass-Filtern (53) des gemessenen Stromstärke-Signals (40) generiert. Mindestens ein Triggersignal (48) wird erzeugt, wenn jeweils ein Betrag des ersten Nutzsignals (41) einen ersten Schwellenwert (SW1) ansteigend durchschreitet. Ein Umdrehungssignal (45) wird inkrementiert oder dekrementiert in Abhängigkeit von einer Polarität (51) einer an den Gleichstrommotor (20) anliegenden Spannung (50). Damit kann eine Anzahl von Umdrehungen (N) einer Bremskomponente der elektrischen Bremse (12) gewonnen werden. Die Zuspannkraft (64) wird in Abhängigkeit von der Anzahl von Umdrehungen (N) ermittelt.

## Beschreibung

Die Erfindung betrifft ein Verfahren zum Bestimmen einer Zuspannkraft einer elektrischen Bremse aufweisend einen Gleichstrommotor. Der Gleichstrommotor wird insbesondere in einem Kraftfahrzeug eingesetzt. Die elektrische Bremse dient in dem Kraftfahrzeug häufig als elektrische Parkbremse. Darüber hinaus betrifft die Erfindung eine elektrische Bremse sowie ein Kraftfahrzeug mit der elektrischen Bremse.

Bei elektrischen Bremsen ist es relevant, bei entsprechender Bremsbetätigung eine Kraft in Form einer Zuspannkraft, Bremskraft oder einen Bremsdruck zu ermitteln. In der Regel werden dazu Kraftsensoren oder Winkelsensoren eingesetzt. Gerade im Bereich von Sekundärbremsen wie einer elektrischen Parkbremse stellt die dazugehörige Sensorik einen Kostennachteil dar. In dem derzeit hart umkämpften Automobilmarkt wird regelmäßig versucht, bei Einzelteilen oder Komponenten für Kraftfahrzeuge weitere Kostenvorteile zu generieren. Diese Patentanmeldung ist von der Motivation getragen, Kostenvorteile im Bereich von elektrischen Komponenten, die mittels eines Gleichstrommotors angetrieben werden, zu entwickeln. Dabei sind insbesondere jede Gleichstrommotoren angesprochen, welche Sekundärfunktionen im Kraftfahrzeug wahrnehmen. So können beispielsweise Gleichstrommotoren für eine elektrische Parkbremse, eine Klimaanlage, elektrische Fensterheber, Kaffeebecherhalter et cetera angesprochen sein. Bevorzugt richtet sich das Augenmerk auf die elektrische Bremse mit einem Gleichstrommotor.

Das US-Patent US 8,222,776 B2 beschreibt einen Rotationsdetektor und einen Gleichstrommotor. Ein Netzgerät erzeugt aus einer Wechselstromspannung eine Gleichspannung und legt diese Gleichspannung an einen Motor an. Der Motor enthält einen Kondensator, der parallel zu einer einphasigen Spule geschaltet ist. Durch diesen Kondensator wird die Impedanz des Motorstromkreises zwischen den Bürsten in Abhängigkeit von der Motordrehung variiert. Eine Änderung in der Impedanz erscheint als Änderung der Amplitude einer Wechselstromkomponente im Motorstrom. Eine Signalverarbeitungseinheit extrahiert eine Wechselstromkomponente aus dem Motorstrom, welche durch eine Stromerfassung detektiert wird. Die Signalverarbeitungseinheit erzeugt einen Drehimpuls, der der Änderung der Amplitude entspricht. Eine Drehwinkelerfassungseinheit detektiert den Drehwinkel des Motors basierend auf diesem Drehimpuls.

Derzeit sind kein Verfahren oder Vorrichtung bekannt, welche bei Gleichstrommotoren in Kraftfahrzeugen ausgehend von einem Stromsignal eine Kraft oder Zuspannkraft ermitteln könnte. Dies liegt daran, dass derzeit für diese Aufgabe eigene Sensoren zum Einsatz kommen. Da jedoch aufgrund des Stromflusses ein Stromsignal vorhanden ist, schlägt diese Anmeldung vor, aus dem Stromsignal einen dazugehörige Zuspannkraft oder einen Druck in Form einer Flächenpressung abzuleiten. Eine Aufgabe der Erfindung kann darin gesehen werden, eine Zuspannkraft und/oder eine dazugehörige Flächenpressung in Form eines Drucks bei einer elektrischen Bremse kostengünstiger zu ermitteln.

Diese Aufgabe wird mithilfe der unabhängigen Patentansprüche dieser Anmeldung gelöst. Sinnvolle Weiterbildungen und vorteilhafte Ausführungsformen ergeben sich durch die Unteransprüche, die Beschreibung sowie anhand der Figuren.

Ein erster Aspekt der Erfindung sieht ein Verfahren zum Bestimmen einer Zuspannkraft einer elektrischen Bremse aufweisend einen Gleichstrommotor mit einer drehbaren Komponente vor. Der Gleichstrommotor kann für den Einsatz in einem Kraftfahrzeug ausgelegt sein. Die elektrische Bremse beinhaltet insbesondere den Gleichstrommotor. Die drehbare Komponente des Gleichstrommotors kann ein Rotor und/oder ein Kommutator sein.

Die Zuspannkraft kann insbesondere jene Kraft sein, mittels derer ein Bremsbelag an eine Bremsscheibe gedrückt oder gepresst wird. Demnach kann die Zuspannkraft sich auf eine (Teil-)Fläche der Bremsscheibe beziehen, die ein Bremsbelag belegt. Die Zuspannkraft kann daher auch einen Druck, einen Zuspanndruck bedeuten. Der Zuspanndruck kann als eine Flächenpressung verstanden werden.

Die elektrische Bremse kann eine aktuierte Betriebsbremse, eine aktuierte Parkbremse oder eine anderweitige Bremse für eine Komponente des Kraftfahrzeugs sein. Zusätzlich oder alternativ kann anstelle der elektrischen Bremse eine elektrische Antriebseinheit verwendet werden. Das Verfahren sieht insbesondere vor, eine Anzahl von Umdrehungen oder eine Anzahl von anteiligen Umdrehungen einer Komponente eines Gleichstrommotors zu ermitteln. Der Begriff "Anzahl von Umdrehungen" kann sowohl volle, ganze Umdrehungen als auch anteilige Teilumdrehungen umfassen. Das Verfahren erlaubt bevorzugt anteilige Teilumdrehungen zu bestimmen. Jedoch umfasst die Formulierung "Anzahl von Umdrehungen" auch anteilige Umdrehungen. Ein jeweiliger Anteil der Teilumdrehung an der ganzen Umdrehungen kann von dem Gleichstrommotor abhängig sein. So kann beispielsweise bei einem Gleichstrommotor mit sechs Spulen die Anzahl der Umdrehungen jeweils Teilumdrehungen mit 1/12 einer ganzen Umdrehung sein. Je nach Bedarf können Teilumdrehungen auf ganze Umdrehungen umgerechnet werden. Ein anteiliger Wert einer Teilumdrehung an der ganzen Umdrehung kann von einer Spulenanzahl des Gleichstrommotors abhängig sein.

Das Verfahren beinhaltet folgende Verfahrensschritte. Zunächst wird ein Stromstärke-Signal des Gleichstrommotors mit einer Abtastfrequenz von mindestens 2 Kilohertz gemessen. Das Stromstärke-Signal repräsentiert insbesondere einen zeitlichen Verlauf einer Stromstärke des Gleichstrommotors. Die Stromstärke kann der Stromfluss durch den Gleichstrommotor oder die elektrische Bremse sein. Somit entspricht das Stromstärke-Signal nicht nur einem einzelnen Zahlenwert, sondern einer zeitlichen Abfolge von Stromstärkewerten beziehungsweise einer Stromstärkekurve. Das Stromstärke-Signal beinhaltet somit bevorzugt eine Vielzahl von Stromstärkewerten. Um das weitere Verfahren sinnvoll ausführen zu können, ist eine Abtastfrequenz im Hochfrequenzbereich empfehlenswert. Es ist daher vorgesehen, dass die Abtastfrequenz zum Messen des Stromstärke-Signals wenigstens 2 Kilohertz (kHz), bevorzugt 10 Kilohertz, beträgt.

Ein erstes Nutzsignal wird durch Filtern des gemessenen Stromstärke-Signals mittels eines Hochpass-Filters generiert. Das Generieren des ersten Nutzsignals kann auch als Erzeugen, Ermitteln und/oder Berechnen betrachtet werden. Durch Anwenden eines Hochpass-Filters oder einer entsprechenden Applikation auf das gemessene Stromstärke-Signal kann somit das erste Nutzsignal erzeugt oder generiert werden. Somit kann das erste Nutzsignal mittels eines Hochpass-Filters vom Stromstärke-Signal extrahiert werden.

Eine Vielzahl von Triggersignalen wird erzeugt, wenn das erste Nutzsignal jeweils einen ersten Schwellenwert ansteigend durchschreitet und/oder das erste Nutzsignal einen zweiten Schwellenwert abnehmend unterschreitet. Die Erzeugung der Vielzahl von Triggersignalen kann insbesondere ausgeführt werden, wenn jeweils ein Betrag des ersten Nutzsignals den ersten Schwellenwert überschreitet. Die Vielzahl von Triggersignalen kann eine Abfolge von Zahlenwerten oder binären Werten beinhalten. Die Vielzahl von Triggersignalen kann aus mehreren einzelnen Triggersignalen bestehen. Jedes einzelne Triggersignal kann durch einen einzelnen Zahlenwert repräsentiert sein. Die jeweiligen Zahlenwerte oder binäre Werte repräsentieren insbesondere ein jeweiliges einzelnes Triggersignal. Die Vielzahl von Triggersignale können bereits bei mindestens zwei Triggersignalen angenommen werden. Insbesondere können die Zahlenwerte +1 und -1 sein. Dabei repräsentiert +1 eine Umdrehung im Uhrzeigersinn. Der Wert -1 kann eine Umdrehung entgegen den Uhrzeigersinn darstellen. Da der Betrag des ersten Nutzsignals betrachtet wird, können auch entsprechend negativ erste Schwellenwerte berücksichtigt werden. Beträgt der Schwellenwert beispielsweise 0,3 Ampere, so wird die Vielzahl von Triggersignalen jeweils dann erzeugt, wenn das erste Nutzsignal größer als 0,3 Ampere oder kleiner als -0,3 Ampere ist. Hier kommt es insbesondere auf den zeitlichen Verlauf des ersten Nutzsignals an. Ein einzelnes Triggersignal kann insbesondere jedesmal genau dann erzeugt werden, wenn der Betrag des ersten Nutzsignals im zeitlichen Verlauf den ersten Schwellenwert durchschreitet oder überschreitet.

Das ansteigende Durchschreiten des ersten Schwellenwertes durch das erste Nutzsignal kann als überschreiten oder überqueren aufgefasst werden. Das ansteigende Durchschreiten repräsentiert insbesondere einen Schnittpunkt des Nutzsignals mit einem konstanten Niveau, der dem jeweiligen Schwellenwert entspricht. Bei einem modifizierten Nutzsignal kann der Schwellenwert einer Null-Linie entsprechen. In diesem Fall entspricht das ansteigende Durchschreiten einer Nullstelle des modifizierten Nutzsignals. Bevorzugt sind alle jeweiligen Nutzsignale zumindest stetig ausgebildet.

Das Triggersignal oder die Vielzahl von Triggersignalen dienen insbesondere dazu, eine Anzahl von Umdrehungen oder Teilumdrehungen zu erfassen. Der jeweilige Schwellenwert ist bevorzugt so gewählt, dass das Erzeugen und/oder Erweitern des Triggersignals einer definierten Umdrehung entspricht. Die definierte Umdrehung kann eine ganze Umdrehung, eine halbe Umdrehung oder ein vorgegebener Anteil einer Umdrehung sein. Die Vielzahl von Triggersignalen kann eine Abfolge von Zahlenwerten (einzelne Triggersignale) darstellen, wobei jeder Zahlenwert eine entsprechende Umdrehung darstellt.

Bevorzugt beinhaltet die Vielzahl von Triggersignalen genau zwei unterschiedliche Zahlenwerte. Diese unterschiedlichen beiden Zahlenwerte können jedoch mehrfach auftreten. Beinhaltet die Vielzahl von Triggersignalen beispielsweise zehnmal den Wert +1, so repräsentiert dies insbesondere zehnmal eine Umdrehung im Uhrzeigersinn. Je nach Kontext kann das Triggersignal kann somit den jeweiligen einzelnen Zahlenwert ansprechen beziehungsweise die Vielzahl von Zahlenwerten bedeuten. Bevorzugt beinhaltet das Triggersignal eine Vielzahl von Zahlenwerten. Eine Vielzahl von Triggersignalen mit nur einem einzigen Zahlenwert wäre zwar möglich, ist jedoch eher unwahrscheinlich. Die Vielzahl von Triggersignalen kann auch als mindestens ein Triggersignal betrachtet werden.

In einem weiteren Verfahrensschritt wird ein Umdrehungssignal in Abhängigkeit von der Vielzahl der Triggersignale inkrementiert oder dekrementiert. Zusätzlich kann das Inkrementieren und/oder das Dekrementieren von einer Polarität einer an den Gleichstrommotor anliegenden Spannung oder dem gemessenen Stromstärke-Signal abhängig sein. Dies führt insbesondere zu einem Signal für die Anzahl an (Teil)-Umdrehungen einer Komponente des Gleichstrommotors, insbesondere eines Rotors oder eines Kommutators. Das Umdrehungssignal startet bevorzugt mit dem Wert Null. Das Umdrehungssignal kann zu Beginn des Verfahrens einen vorgebenden Wert aufweisen.

Zusätzlich oder alternativ kann ein zeitliches Integrieren der Vielzahl der Triggersignale vorgesehen sein. Damit kann eine Anzahl von Umdrehungen einer Bremskomponente der elektrischen Bremse ermittelt werden oder erhalten werden. Inkrementieren bedeutet insbesondere eine schrittweise Erhöhung und Dekrementieren bedeutet insbesondere ein schrittweises Vermindern des Umdrehungssignals. Das Inkrementieren beziehungsweise Dekrementieren des Umdrehungssignals entspricht bevorzugt einer Zählung von (Teil)-Umdrehungen der Bremskomponente. Da bevorzugt ein einzelnes Triggersignal bei einer (Teil)-Umdrehung erzeugt wird, kann durch Inkrementieren oder Dekrementieren eine entsprechende Umdrehung der elektrischen Bremse gezählt werden. Dies liegt bevorzugt daran, dass der erste Schwellenwert so angepasst ist, dass zuverlässig eine entsprechende (Teil)-Umdrehung einer Bremskomponente der elektrischen Bremse gezählt wird. Das einzelne Triggersignal kann somit als Indikator für die (Teil)-Umdrehung betrachtet werden. Die Vielzahl von Triggersignalen können beim Inkrementieren oder Dekrementieren entsprechend aufsummiert werden. Je nach Drehrichtung kann inkrementiert oder dekrementiert werden. Die Drehrichtung kann bereits in jedem einzelnen Triggersignal enthalten sein. Dies ist mittels der binären Werte +1 und -1 möglich. Alternativ kann die Drehrichtung basierend auf der Polarität ermittelt werden.

Alternativ kann das erste Nutzsignal und/oder der Vielzahl der Triggersignale mithilfe einer numerischen Funktion approximiert werden. Dazu können beispielsweise Stützstellen eingesetzt werden. Eine so erhaltene Funktion, welche die mehreren einzelnen Triggersignale approximiert, kann analytisch oder numerisch integriert werden. So kann alternativ auf die Anzahl von Umdrehungen geschlossen werden. Das Erzeugen der Vielzahl von Triggersignalen kann auch als Erfassen von lokalen Maxima und Minima des ersten Nutzsignals angesehen werden. Insbesondere kann eine Auswahl des ersten Schwellenwertes ein Erfassen dieser Maxima oder Minima und somit die Ermittlung der Anzahl von Umdrehungen beeinflussen. Das Inkrementieren oder Dekrementieren des Umdrehungssignals kann mithilfe eines Zählers umgesetzt werden.

Die Vielzahl von Triggersignalen beinhalten bevorzugt mehrere einzelne Triggersignale beziehungsweise können eine zeitliche Abfolge mehrerer einzelner Triggersignale sein. Das Umdrehungssignal kann alternativ basierend auf den mehreren einzelnen Triggersignalen inkrementiert oder dekrementiert werden. Dies entspricht insbesondere dem Inkrementieren und/oder Dekrementieren des Umdrehungssignales in Abhängigkeit von der Vielzahl an Triggersignalen. Das Inkrementieren und/oder Dekrementieren wird bevorzugt mehrfach ausgeführt. Dabei kann eine Anzahl der einzelnen Triggersignale genau einer Anzahl von Inkrementierungen und/oder Dekrementierungen entsprechen.

In Abhängigkeit von der Anzahl von Umdrehungen werden die Zuspannkraft und/oder die dazugehörige Flächenpressung ermittelt. Dazu kann beispielsweise eine lineare Funktion verwendet werden. Bevorzugt wird bei der linearen Funktion eine entsprechende Gleitreibung berücksichtigt. Dies bedeutet insbesondere, dass eine bestimmte Anzahl von einzelnen Triggersignalen nicht in das Ermitteln der Zuspannkraft einfließt, also unberücksichtigt bleibt. Dies kann daran liegen, dass eine gewisse Anzahl von (Teil)-Umdrehungen nötig ist, um im Bereich des Lüftspiels ausschließlich eine Gleitreibung zu überwinden, dies jedoch noch nicht in einer entsprechenden Zuspannkraft mündet. Die Begriffe Zuspannkraft, Bremskraft, Bremsdruck und Flächenpressung können im Rahmen dieser Anmeldung als Synonyme betrachtet werden. Je nach Anwendungsfall kann die Kraft oder der dazugehörige Druck im Vordergrund stehen. Bei der Flächenpressung wird die Zuspannkraft bevorzugt auf eine Fläche normiert, die der Bremsbelag bei der Anpressung auf die Bremsscheibe belegt.

Mithilfe dieses Verfahrens kann die Zuspannkraft ermittelt werden, ohne dabei einen Kraftsensor einsetzen zu müssen. Eine elektrische Bremse benötigt zum Betrieb ohnehin elektrischen Strom. Die Erfindung beruht auf der Erkenntnis, dass dieses Stromstärke-Signal des elektrischen Stroms, das für den Betrieb der elektrischen Bremse ohnehin nötig ist, für das Ermitteln der Zuspannkraft herangezogen werden kann. Hierdurch können bei zahlreichen Gleichstrommotoren in Kraftfahrzeugen Kostenvorteile generiert werden. Im Idealfall muss lediglich eine entsprechende Auswerteeinheit oder Steuereinheit so eingerichtet werden, dass das zugehörige Stromstärke-Signal für das Ermitteln der Zuspannkraft auswertbar ist.

Zusätzlich oder alternativ kann ein zweites Nutzsignal durch Filtern des Stromstärke-Signals mittels eines Tiefpass-Filters generiert werden. In Abhängigkeit von dem zweiten Nutzsignal wird die Zuspannkraft ermittelt. Die Zuspannkraft kann somit anhand des zweiten Nutzsignals anstelle des Umdrehungssignals ermittelt werden. Es ist möglich, dass die Zuspannkraft sowohl mithilfe der Anzahl der Umdrehungen als auch mithilfe des zweiten Nutzsignals ermittelt wird. In diesem Fall kann die Zuspannkraft auf zwei unterschiedliche Wege ermittelt werden. Alternativ kann das Verfahren nur eines dieser Möglichkeiten vorsehen. Das tiefpass-gefilterte zweite Nutzsignal kann anstelle des hochpassgefilterten Signals zum Ermitteln der Zuspannkraft verwendet werden. Beispielsweise kann aus dem zweiten Nutzsignal eine Kennlinie gebildet werden.

Eine Tiefpassfilterung des Stromstärke-Signals kann die hochfrequenten Anteile des Stromstärke-Signals herausfiltern. Mithilfe eines Hochpass-Filters und eines Tiefpass-Filters kann das Stromstärke-Signal in hochfrequente und niederfrequente Anteile aufgeteilt werden. Eine solche Filterung kann mit einem Splitter im Telefonnetz verglichen werden. Die Telefonsignale entsprechen insbesondere einem niederfrequenten Anteil, die Daten werden insbesondere durch das hochfrequente Signal repräsentiert. Der Hochpass-Filter beziehungsweise Tiefpass-Filter können digital oder analog ausgeführt sein. Der Tiefpass-Filter kann ein Tiefpass-Filter zweiter Ordnung mit einer Eckfrequenz von 10 Hertz sein. Entsprechende unterschiedliche Filtertypen können bei dem Hochpass-Filter eingesetzt werden. Hier können entsprechend Hochpass-Filter höherer Ordnung zum Einsatz kommen. Alternativ kann ein Savitzky-Golay-Filter als Hochpass-Filter oder Tiefpass-Filter eingesetzt werden. Somit kann diese Weiterbildung eine Kombination von Hochpass-Filter und Tiefpass-Filter vorsehen. Das Tiefpass-gefilterte Stromstärke-Signal kann so zum Ermitteln der Zuspannkraft genutzt werden. Dazu kann eine entsprechende Zuordnung oder eine entsprechende Kennlinie, die das zweite Nutzsignal mit der Zuspannkraft verbindet, eingesetzt werden.

Zusätzlich oder alternativ kann ein drittes Nutzsignal in Abhängigkeit von dem ersten und zweiten Nutzsignal ermittelt werden. Insbesondere kann das dritte Nutzsignal durch eine Subtraktion des zweiten Nutzsignals vom ersten Nutzsignal bestimmt werden. Das dritte Nutzsignal wird zum Erzeugen der Vielzahl von Triggersignalen verwendet. Alternativ kann auch das erste Nutzsignal vom zweiten Nutzsignal subtrahiert beziehungsweise abgezogen werden. Das mindestens eine Triggersignal oder die Vielzahl von Triggersignalen können erzeugt werden, wenn das dritte Nutzsignal jeweils einen dritten Schwellenwert ansteigend durchschreitet oder das dritte Nutzsignal einen vierten Schwellenwert abfallend durchschreitet. Alternativ kann dazu ein Betrag des dritten Nutzsignals mit dem dritten Schwellenwert verglichen werden.

Wenn der Betrag des dritten Nutzsignals jeweils den dritten Schwellenwert überschreitet, so wird bevorzugt das einzelne Triggersignal erzeugt. Bei einer entsprechend wiederholten Überschreitung oder Durchschreitung ergibt sich daraus bevorzugt die Vielzahl von Triggersignalen. Da das dritte Nutzsignal durch eine Subtraktion hervorgehen kann, kann das dritte Nutzsignal sowohl Werte im positiven als auch im negativen Bereich aufweisen. Das Stromstärke-Signal ist dagegen (im zeitlichen Mittel) bevorzugt stets positiv oder stets negativ. Dies liegt insbesondere daran, dass das Verfahren im Zusammenhang mit Gleichstrommotoren Anwendung findet. Bei einer entsprechenden Subtraktion bei dem dritten Nutzsignal können jedoch um den Wert 0 schwankende Werte auftreten. Dies kann hilfreich sein, in dem dritten Nutzsignal lokale Maxima oder Minima zuverlässiger zu detektieren. So kann es gelingen, eine Anzahl von Umdrehungen effektiver oder zuverlässiger zu erfassen.

Zusätzlich oder alternativ wird das Triggersignal nur dann inkrementiert, wenn nach einem früheren Inkrementieren das erste Nutzsignal oder das dritte Nutzsignal wenigstens einen negativen Wert aufweist. Damit ist insbesondere gemeint, dass ein zeitlicher Verlauf des dritten Nutzsignals abwechselnd positive lokale Maxima und negative lokale Minima aufweist. Zum Detektieren der positiven lokalen Maximal oder negativen lokalen Minima können entsprechende Auswerteverfahren herangezogen werden. So kann sichergestellt werden, dass keine Doppelspitzen gezählt werden. Würde beispielsweise unmittelbar nach einem lokalen Maximum eine Art Zick-Zack-Muster oder Rauschen auftreten, so könnte unter Umständen das Triggersignal fehlerhafte Werte beinhalten. Bei dieser Weiterbildung kann jedoch sichergestellt werden, dass lokale Maxima zuverlässiger als solche erkannt werden. Denn bei stetigen Kurven wie dem hier vorliegenden Stromstärke-Signal entspricht ein lokales Maximum unmittelbar nach einem lokalen Minimum tatsächlich einem lokalen Maximum. Bevorzugt wird dabei das dritte Nutzsignal so gewählt, dass die lokalen Maxima im positiven Bereich liegen und die lokalen Minima im negativen Bereich sind. So kann noch einfacher festgestellt werden, ob ein lokales Maximum oder ein lokales Minimum vorhanden ist. Diese Weiterbildung kann entsprechend analog für das Dekrementieren ausgebildet sein. In diesem Fall wird das Triggersignal nur dann dekrementiert, wenn nach einem früheren Dekrementieren das dritte Nutzsignal wenigstens einen positiven Wert aufweist.

Alternativ kann das dritte Nutzsignal numerisch oder analytisch approximiert werden und das dritte Nutzsignal zeitlich integriert werden, um das Umdrehungssignal zu erhalten. Das Integrieren des dritten Nutzsignals repräsentiert eine weitere Möglichkeit, das Umdrehungssignal zu inkrementieren oder zu dekrementieren.

In einer zusätzlichen oder alternativen Weiterbildung kann für das Erzeugen der Vielzahl von Triggersignalen jeweils ein einzelnes Triggersignal nur dann erzeugt werden, wenn dem einzelnen Triggersignal genau ein ansteigendes Durchschreiten des ersten Nutzsignals durch den ersten Schwellenwert und/oder des dritten Nutzsignals durch einen dritten Schwellenwert zugeordnet werden kann. Diese Systematik kann entsprechend auf Unterschreiten des ersten und/oder dritten Nutzsignals angewandt werden. In diesem Fall wird das einzelne Triggersignal nur dann erzeugt wird, wenn dem einzelnen Triggersignal genau ein abfallendes Durchschreiten beziehungsweise Unterschreiten des ersten Nutzsignals durch den zweiten Schwellenwert und/oder ein abfallendes Durchschreiten des dritten Nutzsignals durch einen vierten Schwellenwert zugeordnet werden kann. Jedes einzelne Triggersignal wird bevorzugt einem einzigen Durchschreiten in Form einer Überschreitung oder Unterschreitung zugeordnet. Das jeweilige Durchschreiten und die jeweiligen einzelnen Triggersignale können eineindeutig einander zuordenbar sein. Das jeweilige Durchschreiten und die einzelnen Triggersignale können zueinander bijektiv sein.

Zusätzlich oder alternativ kann für das Inkrementieren jeweils ein positiver Wert für ein einzelnes Triggersignal der Vielzahl von Triggersignalen erzeugt werden, wenn die an den Gleichstrommotor anliegende Spannung oder das gemessene Stromstärke-Signal positiv ist. Zusätzlich oder alternativ kann für das Dekrementieren jeweils ein negativer Wert für das einzelne Triggersignal der Vielzahl von Triggersignalen und/oder das einzelne Triggersignal erzeugt werden, wenn die an dem Gleichstrommotor anliegende Spannung oder das gemessene Stromstärke-Signal negativ ist. Die Polarität beziehungsweise das Vorzeichen der anliegenden Spannung oder das gemessene Stromstärke-Signal gibt insbesondere Aufschluss über eine Drehrichtung einer Komponente des Gleichstrommotors. Somit kann der positive Wert eine Umdrehung in Uhrzeigerrichtung repräsentieren, während ein negativer Wert eine Umdrehung entgegen dem Uhrzeigersinn darstellen kann. So kann bereits anhand der jeweiligen Werte des einzelnen Triggersignals die Drehrichtung erkannt werden.

Zusätzlich oder alternativ kann für das Inkrementieren ein erstes Teiltriggersignal erzeugt werden, wenn jeweils ein Wert des ersten Nutzsignals den ersten Schwellenwert ansteigend durchschreitet oder überschreitet und ein zweites Teiltriggersignal erzeugt werden, wenn jeweils ein Wert des ersten Nutzsignals den zweiten Schwellenwert fallend durchschreitet oder unterschreitet. Diese Weiterbildung kann analog auf das dritte Nutzsignal angewendet werden. In diesem Fall können zwei unterschiedliche Triggersignale erzeugt werden. Die Teiltriggersignale beinhalten bevorzugt mehrere einzelne Triggersignale, bevorzugt jeweils einen einzigen konstanten Zahlenwert. Das erste Teiltriggersignal beinhaltet bevorzugt ausschließlich Zahlenwerte, die eine Umdrehung im Uhrzeigersinn repräsentieren. Dies können mehrere Zahlenwerte in Form von +1 sein. Entsprechend beinhaltet das zweite Teiltriggersignal ausschließlich Zahlenwerte, beispielsweise mehrere Werte von -1, die eine Umdrehung entgegen dem Uhrzeigersinn darstellen. Damit kann eine Auswertung hinsichtlich der Zuspannkraft vereinfacht werden.

Zusätzlich oder alternativ kann das Stromstärke-Signal zum Messen einer Stromstärke des Gleichstrommotors mit einer Abtastfrequenz zwischen 5 Kilohertz (kHz) und 20 Kilohertz, bevorzugt mit 10 Kilohertz abgetastet werden. Da das Stromstärke-Signal häufig hochfrequent ist, bedarf es einer entsprechenden hochfrequenten Messung. Anhand eigener Versuchsreihen hat sich herausgestellt, dass eine Abtastfrequenz von 10 Kilohertz ausreichend ist, um das Stromstärke-Signal hinsichtlich auftretender Maxima und Minima zuverlässig untersuchen zu können. Damit kann sichergestellt werden, dass hinsichtlich des Stromstärke-Signals jedes Maximum oder Minimum erfasst wird und somit jedes einzelne Triggersignal zuverlässig erzeugt wird. Damit kann die Anzahl von Umdrehungen der drehbaren Bremskomponente der elektrischen Bremse bestimmt werden beziehungsweise das Umdrehungssignal und daraus wiederum die Zuspannkraft ermittelt werden.

Zusätzlich oder alternativ kann für ein Regeln der Zuspannkraft eine Soll-Anzahl von Umdrehungen in Abhängigkeit von einer Kennlinie und von einer vorgegebenen Soll-Zuspannkraft ermittelt werden. Die Kennlinie kann eine Funktion, Abbildung und/oder Vorschrift sein, welche die Anzahl von (Teil)-Umdrehungen in die Zuspannkraft überführt. Die Kennlinie ist bevorzugt streng monoton steigend. Sie kann zusätzlich stetig differenzierbar sein. Insbesondere kann die Kennlinie umkehrbar sein, d.h. aus der Kennlinie kann die dazugehörige Umkehrfunktion gebildet werden. Insbesondere wird bei der Kennlinie jedem einzelnen Wert für die Anzahl der Umdrehungen exakt ein Wert für den Motorstrom oder die Kraft zugeordnet. Mittels der Kennlinie kann die Anzahl der (Teil)-Umdrehungen in eine Kraft, insbesondere die Zuspannkraft, umgerechnet werden. Die Soll-Anzahl von Umdrehungen kann eine erforderliche Anzahl von (Teil)-Umdrehungen sein, um die vorgegebene Soll-Bremskraft zu erreichen. Die Soll-Bremskraft kann von einem externen oder übergeordneten Bremssystem vorgegeben sein. Als Möglichkeit sei an dieser Stelle ein ESP-Bremssystem oder ein elektrisches Parkbremssystem genannt. Mithilfe der vorgegebenen Soll-Bremskraft und der Zuspannkraft, die von der Vielzahl von Triggersignalen bestimmt werden kann, kann die Zuspannkraft auf die vorgegebene Soll-Bremskraft eingeregelt werden. Die Soll-Bremskraft kann anhand einer Soll-Umdrehungsanzahl repräsentiert sein. Somit kann der Gleichstrommotor angesteuert werden mit dem Ziel, die Anzahl an Umdrehungen an die Soll-Umdrehungsanzahl anzugleichen, was der Regelung entspricht.

Basierend auf dieser Soll-Anzahl von Umdrehungen kann mittels einer Regelung die Anzahl der (Teil)-Umdrehungen, abgeleitet aus dem mindestens einen Triggersignal und/oder der Vielzahl der Triggersignale, auf die Soll-Anzahl von Umdrehungen eingestellt werden. Die Anzahl der (Teil)-Umdrehungen repräsentiert insbesondere die tatsächlich durchgeführten Umdrehungen, während die Soll-Anzahl von Umdrehungen insbesondere die zu erreichenden, erforderlichen Umdrehungen angibt. Somit kann gemäß dieser Weiterbildung die Soll-Anzahl von Umdrehungen mit einer tatsächlichen Anzahl der Umdrehungen, abgeleitet aus der Vielzahl von Triggersignalen und/oder den mehreren einzelnen Triggersignalen, verglichen werden. Die Soll-Anzahl von Umdrehungen kann anhand der Kennlinie ermittelt werden. Dazu kann anhand der Kennlinie die bereits erreichte Zuspannkraft, abgeleitet aus der Vielzahl von Triggersignalen, mit der vorgegebenen Soll-Bremskraft verglichen werden. Mittels eines Reglers, zum Beispiel eines Winkel-Reglers, kann der Gleichstrommotor entsprechend angesteuert werden, damit die Zuspannkraft sich auf die Soll-Bremskraft einregelt.

Ein einzelnes Triggersignal kann die Form einer Spitze, eines Spikes haben. Jeder Spike kann eine Umdrehung oder Teilumdrehung darstellen. Ein Spike im einzelnen Triggersignal erscheint bevorzugt nur, wenn der Betrag des ersten Nutzsignals den ersten Schwellenwert übersteigt. Eine Summe der Spikes entspricht dann bevorzugt der Anzahl der Umdrehungen, Teilumdrehungen oder dem Umdrehungssignal.

Eine zusätzliche oder alternative Weiterbildung sieht vor, dass die Kennlinie aus der Anzahl von Umdrehungen oder aus dem Umdrehungssignal, sowie dem Stromstärke-Signal oder dem zweiten Nutzsignal gebildet wird. Aus einer durch eine externe Bremsenregelung vorgegebenen Soll-Bremskraft kann die Soll-Anzahl von Umdrehungen mittels der Kennlinie bestimmt werden. Bevorzugt wird die Anzahl der Umdrehungen auf die Soll-Anzahl von Umdrehungen eingeregelt.

Die elektrische Bremse weist insbesondere eine konstante mechanische Übersetzung vom rotierenden Motor zu einem linear verschiebbaren Kolben auf. Insofern besteht ein linearer Zusammenhang zwischen einem Motorstrom und der Zuspannkraft. Aus dem Motorstrom kann die Zuspannkraft abgeleitet oder bestimmt werden. Der Motorstrom wird bevorzugt durch das Stromstärke-Signal dargestellt. Ein derartiger Zusammenhang kann konstruktiv vorgegeben sein und wird bevorzugt im Vorfeld bestimmt. Dazu sollte das Stromstärke-Signal mittels eines Tiefpasses gefiltert werden, um für die Generierung des zweiten Nutzsignals hochfrequente Signalanteile zu eliminieren. Um eine gleiche Phasenlage zu erhalten, wird ein Winkelsignal bevorzugt mit demselben Tiefpass gefiltert. Das Winkelsignal beschreibt insbesondere eine Anzahl von Umdrehungen pro Zeiteinheit.

Mithilfe eines Drehreglers oder Winkelreglers kann die Anzahl der Umdrehungen im Hinblick auf die ermittelte Soll-Anzahl von Umdrehungen verändert werden. Das Messen des Stromstärke-Signals, das Generieren des ersten Nutzsignals sowie das Erzeugen des dazugehörigen mindestens einen Triggersignals werden bevorzugt unter Verwendung einer Abtastfrequenz von mindestens 2 Kilohertz durchgeführt.

Dahingegen kann die Regelung oder das Einregeln der Zuspannkraft mit einer geringeren Frequenz ausgeführt werden. Insbesondere kann die Regelung mit einer Frequenz von 100 Hertz ausgeführt werden. Die Regelung kann somit in einem niederfrequenten Bereich erfolgen. Der niederfrequente Bereich weist gegenüber dem hochfrequenten Bereich eine deutlich geringere Frequenz auf.

Zusätzlich oder alternativ kann die Kennlinie vorgegeben werden, nach jedem Bremsbelagwechsel und/oder nach jeder Bremsbetätigung der elektrischen Bremse neu kalibriert werden. Die Bremsbetätigung ist dabei bevorzugt eine maximal mögliche Bremsbetätigung der elektrischen Bremse. Dazu kann die Zuspannkraft mit dem Stromstärke-Signal abgestimmt werden. Im einfachsten Fall erfolgt die Kalibrierung linear. Dabei kann eine Kraft, die zur Reibungsüberwindung nötig ist, einem vorgegebenen Stromstärkewert zugeordnet werden. Dies kann beispielsweise 1 Ampere sein. Dieser Stromwert würde einer Zuspannkraft von 0 Newton entsprechen. Je nach Stromwert, der sich bei einer maximal betätigten elektrischen Bremse ergibt, entspricht dabei bevorzugt einer maximal möglichen Zuspannkraft. Anhand dieser beiden Punkte kann eine lineare Kennlinie abgeleitet werden. Bevorzugt wird dabei das zweite Nutzsignal als abgewandeltes tiefpassgefiltertes Stromstärke-Signal eingesetzt.

Anhand eines signifikanten Ansteigens des zweiten Nutzsignals kann auf ein Überwinden der Reibungskraft und/oder auf einen Berührungspunkt eines Bremsbelags in der elektrischen Bremse geschlossen werden. Ein signifikanter Anstieg kann beispielsweise mittels eines Anstiegs des zweiten Nutzsignals um ein vorgegebenes Niveau, beispielsweise um mindestens 5 Prozent, festgestellt werden. Die Kennlinie kann in einem Steuergerät oder einer Auswerteeinheit abgespeichert sein. Es ist möglich, die Kennlinie bei jedem Abstellen des Kraftfahrzeugs oder eines Parkierens erneut zu kalibrieren. Damit kann eine Steifigkeitserhöhung bei einer abnehmenden Bremsbelagdicke berücksichtigt werden. Die Kennlinie kann somit das zweite Nutzsignal mit der Anzahl von Umdrehungen verknüpfen. Das zweite Nutzsignal kann wiederum mittels einer entsprechenden Funktion in die Zuspannkraft umgerechnet werden. Alternativ kann damit ein Stromstärkewert aus dem zweiten Nutzsignal, der die Zuspannkraft repräsentiert, einer Soll-Anzahl von Umdrehungen zugeordnet werden, um die erforderliche Soll-Bremskraft für die elektrische Bremse zu erreichen. Damit kann zuverlässig eine erforderliche Bremskraft eingestellt werden.

Die Kennlinie kann von einer Neigung und/oder von einem Fahrzeuggewicht abhängig sein. Tendenziell ist bei einer stärkeren Fahrbahnneigung eine größere Zuspannkraft erforderlich, um ein Kraftfahrzeug sicher zu halten oder zu bremsen. Mittels eines entsprechenden Umgebungssensors wie zum Beispiel eines Lagesensors kann eine Neigung einer Fahrbahn bestimmt werden. Die Neigung und/oder weitere Fahrzeugparameter wie zum Beispiel ein Reifenzustand, ein Fahrzeuggewicht et cetera können mittels einer entsprechenden Kennlinie berücksichtigt werden. So kann beispielsweise bei einer geneigten Fahrbahn eine größere Zuspannkraft nötig sein als bei einer ebenen Fahrbahn. Somit können zusätzliche Parameter für das Bestimmen der Zuspannkraft berücksichtigt werden.

Zusätzlich oder alternativ kann mittels des zweiten Nutzsignals ein Berührungspunkt eines Bremssignals ermittelt werden. Dazu wird insbesondere der Berührungspunkt durch einen Anstieg der Spannkraft oder Zuspannkraft um ein vorgegebenes Niveau festgestellt. Der Anstieg kann beispielsweise 10 Prozent von einem Basisniveau betragen. Bei einem Gleichstrommotor ist der Phasenstrom insbesondere proportional zu einem Drehmoment. Da die elektrische Parkbremse insbesondere eine konstante mechanische Übersetzung von einem rotierenden Motor zu einem linear verschiebbaren Kolben aufweist, kann somit auch ein linearer Zusammenhang zwischen dem Motorstrom und der Zuspannkraft bestehen. Dieser Zusammenhang ist häufig konstruktiv vorgegeben und kann im Vorfeld bestimmt werden. Dazu ist es vorteilhaft, das Stromstärke-Signal tiefpasszufiltern, um hochfrequente Signalanteile zu eliminieren. Dies entspricht dem zweiten Nutzsignal.

Bei der Ermittlung des Berührungspunktes kann insbesondere die Systemreibung der elektrischen Bremse berücksichtigt werden. Die Systemreibung kann als Gleitreibung angesehen werden und kann mittels eines Versuchs ermittelt werden. Dazu kann die elektrische Bremse lastfrei durch entsprechendes Vorfahren und Zurückfahren betrieben werden. Dabei kann eine Anzahl von Drehungen oder ein zeitliche Verlauf mit einer Stromstärke in Verbindung gesetzt werden. Die Anzahl von (Teil)-Umdrehungen kann mittels des erfindungsgemäßen Verfahrens oder mithilfe eines eigenen Drehzahlsensors bestimmt werden. Ein merkbarer signifikanter Anstieg einer derartig ermittelten Kraftkurve kann anzeigen, ab wann der Bremsbelag auf die Bremsscheibe trifft. Diese Stelle kann als Touch-Punkt bezeichnet werden. Ab diesem Touch-Punkt beginnt insbesondere eine elastische Belagskompression.

Zusätzlich oder alternativ kann der Berührungspunkt regelmäßig neu festgestellt werden und daraus ein Verschleißsignal der elektrischen Bremse gewonnen werden. Mithilfe des Verschleißsignals kann eine zu starke Abnutzung der elektrischen Bremse rechtzeitig erkannt werden. Es ist möglich, bei einer zu stark abgenutzten elektrischen Bremse ein Warnsignal bereitzustellen.

Ein zweiter Aspekt der Erfindung betrifft eine elektrische Bremse für ein Kraftfahrzeug. Die elektrische Bremse weist einen Gleichstrommotor zum Betreiben der elektrischen Bremse sowie einen Stromsensor zum Messen eines Stromstärke-Signals des Gleichstrommotors mit einer Abtastfrequenz von mindestens 2 Kilohertz auf. Der Gleichstrommotor weist eine drehbare Komponente, wie zum Beispiel einen Rotor oder einen Kommutator auf. Die elektrische Bremse weist einen Hochpass-Filter zum Generieren eines ersten Nutzsignals durch Filtern des gemessenen Stromstärke-Signals auf. Ferner weist die elektrische Bremse eine Auswerteeinheit auf. Alternativ kann die Auswerteeinheit den Hochpass-Filter beinhalten.

Die Auswerteeinheit ist eingerichtet, mindestens ein Triggersignal oder eine Vielzahl von Triggersignalen zu erzeugen, wenn das erste Nutzsignal jeweils einen ersten Schwellenwert ansteigend durchschreitet und/oder das erste Nutzsignal einen zweiten Schwellenwert abnehmend durchschreitet. Ein ansteigendes Durchschreiten kann als überschreiten, ein abnehmendes oder fallendes Durchschreiten kann als unterschreiten aufgefasst werden. Ferner wird ein Umdrehungssignal in Abhängigkeit von der Vielzahl von Triggersignalen inkrementiert oder dekrementiert und/oder das mindestens eine Triggersignal oder die Vielzahl von Triggersignalen werden zeitlich integriert, um eine Anzahl von Umdrehungen der drehbaren Bremskomponente der elektrischen Bremse zu erhalten. Das Umdrehungssignal kann einen vorgegebenen Startwert aufweisen, der insbesondere null sein kann. Das Inkrementieren und/oder Dekrementieren kann zusätzlich von einer Polarität einer an dem Gleichstrommotor anliegenden Spannung abhängig sein. Damit kann über ein Vorzeichen der Spannung eine Drehrichtung beim Erfassen der Anzahl der Umdrehungen berücksichtigt werden.

In Abhängigkeit von der Anzahl von Umdrehungen und/oder dem Umdrehungssignal werden die Zuspannkraft und/oder ein Druck für eine Flächenpressung der elektrischen Bremse ermittelt. Die im Zusammenhang mit dem ersten Aspekt der Erfindung genannten Weiterbildungen, Vorteile sowie alternativen Ausführungsformen gelten sinngemäß und analog für den zweiten Aspekt der Erfindung sowie umgekehrt. Somit können Vorrichtungsmerkmale als entsprechende Verfahrensmerkmale angesehen werden sowie umgekehrt. Bereits erläuterte vorteilhafte Weiterbildungen und Ausführungsformen gelten somit sinngemäß für die elektrische Bremse und das Kraftfahrzeug.

Eine zusätzliche oder alternative Ausführungsform sieht vor, dass die elektrische Bremse und/oder die Auswerteeinheit einen Trigger aufweist. Sowohl Trigger also auch Hochpass-Filter können analog und/oder digital ausgebildet sein. Die Auswerteeinheit kann einen Zähler zum Erzeugen der Vielzahl von Triggersignalen und der einzelnen Triggersignale beinhalteten. Der Zähler dient insbesondere dem Inkrementieren oder Dekrementieren des Umdrehungssignals. Bei einem positiven einzelnen Triggersignal kann der Zähler das Umdrehungssignal schrittweise um 1 erhöhen, während bei einem negativen Signal eine entsprechende Reduktion stattfindet.

Ein dritter Aspekt der Erfindung betrifft ein Kraftfahrzeug mit der elektrischen Bremse. Die elektrische Bremse benötigt bevorzugt keinerlei zusätzliche Kraftsensoren, um die Bremskraft zu bestimmen. Somit kann die elektrische Bremse mit weniger Aufwand oder weniger Kosten bereitgestellt werden. Insgesamt kann so hinsichtlich des Kraftfahrzeugs ein Kostenvorteil erreicht werden.

Das Betätigen der elektrischen Bremse kann beispielsweise über einen Taster in der Mittelkonsole erfolgen. Ein Zuspannen oder Lösen der elektrischen Bremse kann dabei an jedem Hinterrad über einen Elektromotor erfolgen, der über ein Zwischengetriebe eine Spindel zur Umwandlung der Rotations- in eine Translationsbewegung antreibt. Damit können die Bremsbeläge an die Bremsscheiben gedrückt werden. Durch eine selbsthemmende Auslegung des Zwischengetriebes bleibt die Spannkraft auch bei einer Nichtbestromung der Motoren erhalten. Zum Lösen der elektrischen Bremse müssen die Bremsbeläge durch Bestromung aktiv zurückgesetzt werden. Dazu wird insbesondere die Polarität vertauscht.

Die Auswerteeinheit kann ein neuronales Netz und/oder einen Mikrochip aufweisen. Die Auswerteeinheit kann eine Prozessoreinrichtung aufweisen, die dazu eingerichtet ist, eine Ausführungsform des Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Darüber hinaus kann die Prozessoreinrichtung einen Programmcode aufweisen, der dazu eingerichtet ist, bei Ausführen durch die Prozessoreinrichtung die Ausführungsform des Verfahrens durchzuführen. Der Programmcode kann in einem Datenspeicher der Prozessoreinrichtung gespeichert sein. Somit kann die Erfindung auch ein Computerprogrammprodukt umfassen, welches auf einem Datenträger abgespeichert ist und bei entsprechender Ausführung ausgebildet ist, ein mögliches Verfahren der Erfindung auszuführen.

Die im Zusammenhang mit dem Verfahren gemäß dem ersten Aspekt der Erfindung vorgestellten Merkmale, Weiterbildungen, Ausführungsformen sowie deren Vorteile gelten entsprechend für die elektrische Bremse gemäß dem zweiten Aspekt sowie für das Kraftfahrzeug gemäß dem dritten Aspekt und jeweils umgekehrt.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen.

Die Erfindung wird nun anhand der beigefügten Zeichnungen näher erläutert. Die Zeichnungen stellen bevorzugte Weiterbildungen oder Ausführungsformen für die Erfindung dar. Diese beispielhaften Weiterbildungen oder Ausführungen beschränken die Erfindung in ihrem Umfang jedoch nicht. Hierzu zeigt:
- Fig. 1: eine beispielhafte Darstellung eines Kraftfahrzeugs in Form eines Robotaxis;
- Fig. 2: eine Darstellung zu einem grundsätzlichen Aufbau eines Gleichstrommotors;
- Fig. 3: einen beispielhaften Gleichstrommotor mit Wicklungen und einem Blechpaket;
- Fig. 4: ein beispielhaftes Stromstärke-Signal, erstes, zweites, drittes Nutzsignal, Triggersignal sowie eine Darstellung der Anzahl von Umdrehungen;
- Fig. 5: ein beispielhaftes erstes Nutzsignal zum Ermitteln einer Bremskraft oder eines Berührungspunkts;
- Fig. 6: eine beispielhafte Übersicht über einen Hochfrequenzbereich sowie einen Niederfrequenzbereich zum Ermitteln oder Regeln der Bremskraft.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

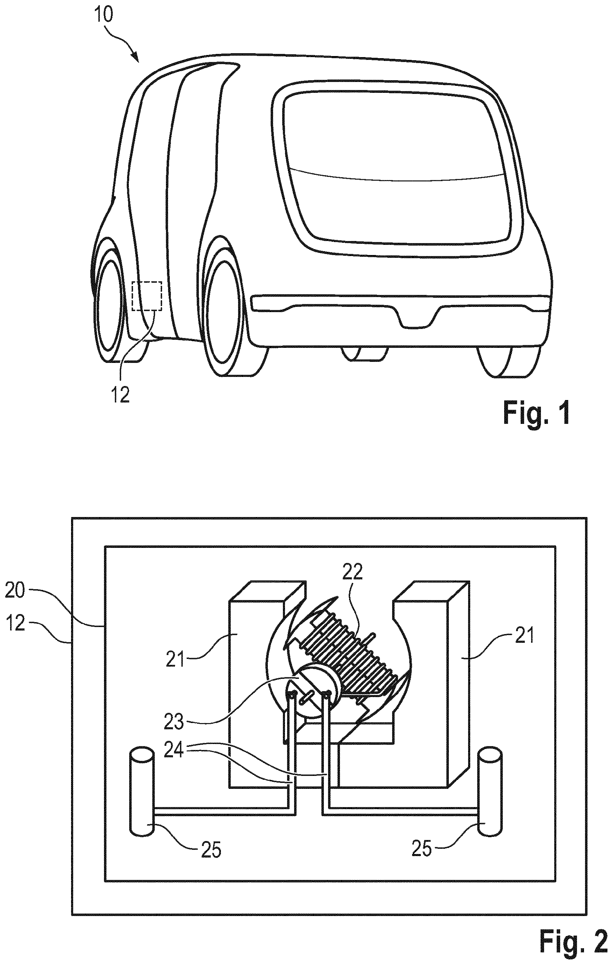

In Fig. 1 ist ein Kraftfahrzeug 10 gezeigt. Das Kraftfahrzeug 10 weist eine elektrische Bremse 12 auf. In Fig. 1 ist das Kraftfahrzeug 10 als Robotaxi 10 ausgebildet. Ein Robotaxi 10 ist eine Art Taxi, jedoch ohne Chauffeur. Ein Insasse eines Robotaxis 10 ist oft ein reiner Fahrgast. Er hat in der Regel keine Möglichkeit, selbst die Fahrzeuglängs- und -querführung zu übernehmen. Die elektrische Bremse 12 kann nicht nur im Rahmen von Robotaxis 10, sondern darüber hinaus auch bei üblichen Kraftfahrzeugen 10 eingesetzt werden, die von Menschen bedient werden.

In Fig. 2 ist beispielhaft die Funktionsweise eines Gleichstrommotors 20 gezeigt. Der Gleichstrommotor 20 weist einen Stator 21, einen Rotor 22, einen Kommutator 23, Bürsten 24 sowie zwei Anschlussklemmen 25 auf. In Fig. 2 ist ein einfach gearteter Gleichstrommotor 20 dargestellt. Damit soll lediglich eine grundsätzliche Funktionsweise des Gleichstrommotors 20 besser dargestellt werden. Der Gleichstrommotor 20 gemäß der Fig. 2 beinhaltet einen kleinen Motor mit einem Polpaar. Das Polpaar weist in Fig. 2 einen Magneten 21 (Permanentmagneten) sowie einen Anker 22 auf. Der Magnet 21 besteht aus einem Nordpol und einem Südpol. Die Permanentmagnete des Stators 21 erzeugen ein stationäres Magnetfeld. Darin ist der Rotor 22 mit Ankerwicklungen drehbar montiert. Wird an die Spule des Rotors 22 eine Gleichspannung angelegt, so bildet sich ein Magnetfeld. Da sich gleichartige Pole abstoßen, verdreht sich der Rotor 22 in eine Position, bei der sich Nord- und Südpol des Rotors 22 zu Süd- und Nordpol des Stators 21 ausrichten.

Damit der Gleichstrommotor 20 sich weiter als 180 Grad dreht, muss eine Polarität 51 der Ankerwicklungen rechtzeitig umgeschaltet werden. Dies gelingt mithilfe des mitdrehenden Kommutators 23. Zu einem definierten Zeitpunkt wird der Stromfluss durch die Spulen unterbrochen, da die Bürsten 24 einen isolierenden Teil des Kommutators 23 überstreichen. Aufgrund eines Massenträgheitsmoments dreht sich der Rotor 22 jedoch weiter. Zu einem späteren Zeitpunkt wird der Stromkreis über die dann nachfolgende Spule erneut geschlossen. In Fig. 2 würde sich das Magnetfeld der Spule umkehren. Bei Gleichstrommotoren 20 mit mehr als zwei Polen wandert das Magnetfeld zur nächsten Spule weiter.

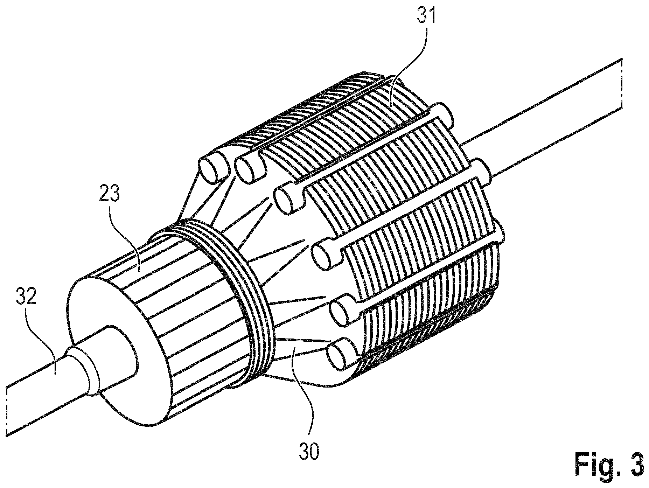

In Fig. 3 ist ein Gleichstrommotor 20 mit mehr als zwei Polen dargestellt. Die Spule ist mithilfe mehrerer Wicklungen 30 realisiert. Der Gleichstrommotor 20 ist an einer Welle 32 angeordnet. Die Wicklungen 30 sind durch ein Blechpaket umgeben. Mit nur einer einzigen Ankerwicklung, wie in Fig. 2 gezeigt, würde sich ein relativ unregelmäßiger Lauf oder Rotation ergeben. Daher greift man bevorzugt auf eine höhere Anzahl an Ankerwicklungen zurück, wie in Fig. 3 dargestellt ist. Wenn der Gleichstrommotor 20 sich dreht, finden proportional zur Polzahl Umschaltungen von einer Spule zur nächsten Spule statt. Bei jeder Umschaltung erfolgt kurzzeitig ein Öffnen und Wiederschließen des Stromkreises, wobei beim Wiederschließen eine vorher unbestromte Spule unter Strom gesetzt wird. Eine elektrische Spule wirkt aufgrund ihrer Induktivität einer Änderung des Stromflusses entgegen. Aus einem Stromfluss 0 einer Spule vor dem Schließen des Stromkreises wird nun aufgrund des Schließens des Stromkreises ein zeitlich ansteigender Strom durchgeleitet. Wird die elektrische Bremse 12 oder ein Elektromotor an einer Gleichspannungsquelle betrieben, beispielsweise mittels einer Batterie, kann jeder Kommutierungswechsel im Stromverlauf erkannt werden. Der Stromverlauf kann durch ein Stromstärke-Signal 40 dargestellt werden. Der Stromverlauf 40 entspricht somit insbesondere nicht nur einem einzigen Stromwert, sondern einem zeitlichen Verlauf einer Stromstärke A. Dieser zeitliche Verlauf der Stromstärke A entspricht bevorzugt dem Stromstärke-Signal 40.

Bei einem Kommutierungswechsel sind insbesondere ein kurzzeitiger Einbruch der Stromstärke und ein entsprechender Wiederanstieg festzustellen. Mithilfe einer konstruktiv bekannten Polzahl ergeben sich bevorzugt doppelt so viele Peaks SP bei dem Stromstärke-Signal 40 pro Umdrehung. Bei einer bekannten Polzahl von sechs würden zwölf Strompeaks je vollständiger Motorumdrehung resultieren. Mit dieser Kenntnis ist es möglich, eine Anzahl von Umdrehungen N der elektrischen Bremse 12 beziehungsweise einer Komponente der elektrischen Bremse 12 ohne zusätzliche Sensorik, also nur durch eine Auswertung des Stromstärke-Signals 40, zu bestimmen. Die Anzahl von Umdrehungen N kann ebenso mittels eines Umdrehungssignals 45 dargestellt werden. Jeder Peak SP kann eine Teilumdrehung kennzeichnen beziehungsweise bedeuten. Die Anzahl von Umdrehungen N kann sich demnach auch nur auf "Teilumdrehungen" oder definierte Anteile von ganzen Umdrehungen beziehen. Die Teilumdrehungen können auf ganze Umdrehungen umgerechnet werden. Beispielsweise ergeben sich bei einem Gleichstrommotor 20 mit sechs Polen zwölf Peaks SP pro vollständiger (Motor)-Umdrehung. Damit würde jeder einzelne Peak SP 30° Umdrehung darstellen (360° / 12 = 30°).

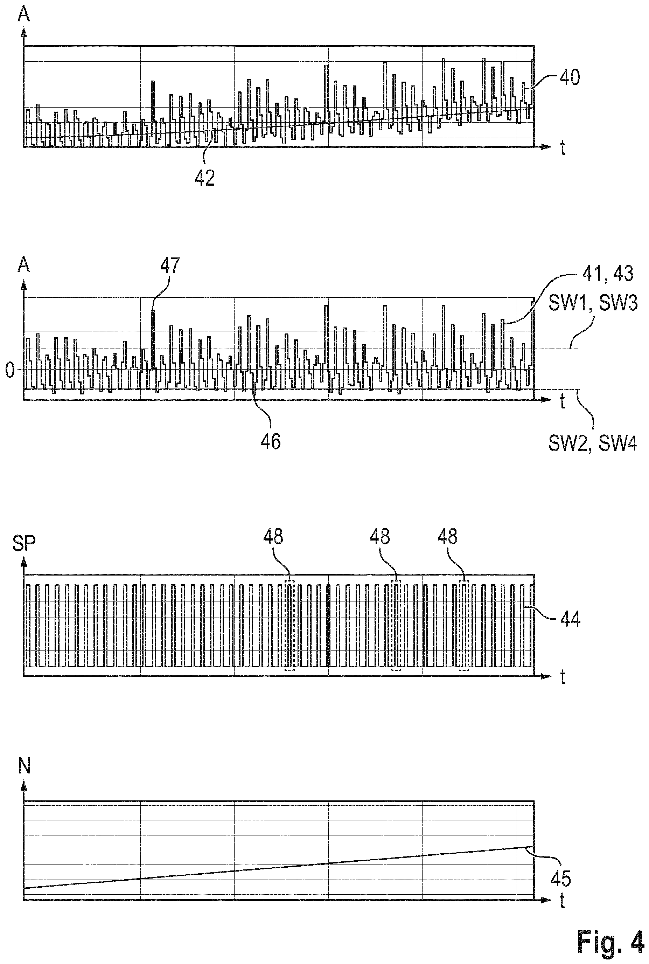

In Fig. 4 ist im oberen Bereich das Stromstärke-Signal 40 dargestellt. In Fig. 4 sind insgesamt vier Diagramme dargestellt. Die x-Achse repräsentiert dabei bevorzugt eine Zeit t. Die in Fig. 4 gezeigten Signalverläufe sind somit von der Zeit t abhängig. Das erste Diagramm (von oben nach unten zählend) zeigt das Stromstärke-Signal 40 mit einer Stromstärke A als y-Achse. Das zweite Diagramm zeigt ein erstes Nutzsignal 41 beziehungsweise ein drittes Nutzsignal 43. Das erste Diagramm beinhaltet als Linie erkennbar ein zweites Nutzsignal 42. In dem zweiten Diagramm sind mittels einer gestrichelten Linie ein erster Schwellenwert SW1, ein zweiter Schwellenwert SW2, ein dritter Schwellenwert SW3 und ein vierter Schwellenwert SW4 angedeutet. Diese Schwellenwerte beziehen sich auf das erste oder dritte Nutzsignal je nachdem, ob der Signalverlauf ansteigend oder abfallend ist.

Das dritte Diagramm zeigt eine Vielzahl von Triggersignalen 44, das mehrere Spitzen SP oder Spikes SP aufweist. Jede Spitze SP stellt ein einzelnes Triggersignal 48 dar. Das einzelne Triggersignal 48 entspricht einer Überschreitung des ersten oder dritten Nutzsignals über den ersten Schwellenwert SW1. Hier kann insbesondere ein zeitlicher Verlauf des ersten und/oder zweiten Nutzsignals berücksichtigt werden. Das einzelne Triggersignal 48 wird bevorzugt erzeugt, wenn das erste und/oder dritte Nutzsignal 41, 43 den dazugehörigen Schwellenwert überschreitet oder unterschreitet, also passiert. Demnach kann das einzelne Triggersignal 48 nur dann erzeugt oder ausgelöst werden, wenn das erste und/oder dritte Nutzsignal 41, 43 bei einem ansteigenden Verlauf den ersten oder dritten Schwellenwert SW1, SW3 überschreitet oder bei einem abfallenden Verlauf des ersten oder dritten Nutzsignals 41, 43 den zweiten oder vierten Schwellenwert SW2, SW4 unterschreitet.

Das einzelene Triggersignal 48 kann entsprechend bei umgekehrter Polarität 51 analog ausgelöst werden und/oder erzeugt werden. In diesem Fall kann (nur) dann ein einzelnes Triggersignal 48 ausgelöst oder generiert werden, wenn das erste Nutzsignal 41 und/oder das dritte Nutzsignal 43 den zweiten oder vierten Schwellenwert SW2, SW4 unterschreitet.

Das einzelne Triggersignal 48 stellt insbesondere eine einzige Teilumdrehung dar, welche durch das einzelne Triggersignal 48 erfasst werden kann. Mehrere einzelne Triggersignale 48 entsprechen mehreren Teilumdrehungen. Die mehreren einzelnen Triggersignale 48 ergeben in ihrer Gesamtheit bevorzugt die Vielzahl von Triggersignalen 44. In dem dritten Diagramm von Fig. 4 sind die einzelnen Triggersignale 48 jeweils als Rechteckimpulse ausgeführt beziehungsweise dargestellt.

Das vierte Diagramm zeigt eine linear ansteigende Gerade. Die dazugehörige y-Achse repräsentiert die Anzahl von (Teil)-Umdrehungen N. Die Gerade des vierten Diagramms zeigt einen zeitlichen Verlauf der Anzahl von Umdrehungen N, welche als Umdrehungssignal 45 erfasst werden kann. Das Umdrehungssignal 45 kann als Zähler 55 betrachtet werden. Somit kann mittels eines Zählers 55 das Umdrehungssignal 45 inkrementiert oder dekrementiert werden. Je nach Drehrichtung wird bevorzugt inkrementiert oder dekrementiert. In dem vierten Diagramm von Fig. 4 wird stets inkrementiert, also das Umdrehungssignal 45 jeweils schrittweise um 1 erhöht. Da hier die Drehrichtung sich nicht ändert, wird stets inkrementiert. Bei einer Umkehr der Drehrichtung würde das Umdrehungssignal 45 sich entsprechend reduzieren. Es würde dekrementiert werden.

Das Stromstärke-Signal 40 kann mittels eines Stromsensors 52 gemessen oder erfasst werden. Das zweite Nutzsignal 42 kann durch eine Tiefpassfilterung des Stromstärke-Signals 40 gewonnen werden. Das zweite Nutzsignal 42 repräsentiert insbesondere eine Spannkraft in Form eines tiefpassgefilterten Stromstärkesignals 57 der elektrischen Bremse 12. Die Spannkraft 57 gibt insbesondere an, mit welcher Kraft ein Bremsbelag auf eine Bremsscheibe gedrückt wird. Das erste Nutzsignal 41 wird insbesondere mittels einer Hochpass-Filterung 53 gewonnen. Zusätzlich kann das erste Nutzsignal 41 mit dem zweiten Nutzsignal 42 zu dem dritten Nutzsignal 43 umgerechnet werden. Dabei kann insbesondere ein Anstieg der Spannkraft 57 berücksichtigt werden. Insbesondere kann das dritte Nutzsignal 43 so beschaffen sein, dass es um den Wert 0 herum oszilliert. Vereinfacht gesprochen entspricht das dritte Nutzsignal 43 einer Verschiebung des Stromstärke-Signals 40 oder des ersten Nutzsignals 41 um das zweite Nutzsignal 42. Bei dem dritten Nutzsignal 43 ist beispielhaft ein Maximum 47 sowie ein Minimum 46 dargestellt.

Das Stromstärke-Signal 40 wird bevorzugt hochpassgefiltert. Dabei wird der Hochpass-Filter 53 bevorzugt entsprechend so gewählt, dass zuverlässig jedes lokale Maximum 47 und jedes lokale Minimum 46 detektiert werden kann. Mithilfe einer Auswerteeinheit 70 kann festgestellt werden, ob ein Betrag des ersten Nutzsignals 41 den ersten Schwellenwert SW1 überschreitet. Dabei wird bevorzugt auch ein Verlauf des ersten Nutzsignals 41 gegenüber der Zeit t berücksichtigt. Dies meint insbesondere, dass das erste Nutzsignal 41 im Zeitverlauf t den ersten Schwellenwert SW1 ausgehend von einem Wert, der kleiner als der erste Schwellenwert SW1 ist, überschreitet. Bei dem Zeitverlauf t kann ein vorgegebenes Zeitintervall gemeint sein, innerhalb dessen diese Überschreitung stattzufinden hat. Dies können Bruchteile von Millisekunden sein. Das vorgebende Zeitintervall kann von einer Frequenz abhängig sein, mit der das Stromstärke-Signal 40 gemessen wird. Insbesondere können bei der Ermittlung, ob das einzelne Triggersignal 48 erzeugt wird, jene Verfahren zum Einsatz kommen, die im Bereich der "Kurvendiskussion" verwendet werden. Es geht dabei vor allem um ein zuverlässiges Ermitteln von lokalen Maxima 47 und lokalen Minima 46.

Dasselbe ist hinsichtlich des dritten Nutzsignals 43 möglich. Dabei wird jedoch bevorzugt der dritte und/oder vierte Schwellenwert SW3, SW4 zugrunde gelegt. Hierbei ist zu beachten, dass die numerische Bezeichnung der Schwellenwerte keinen technischen Charakter hat, sondern nur dazu dienen, unterschiedliche Schwellenwerte unterscheidbar zu machen.

Jedes Mal, wenn das dritte Nutzsignal 43 den dritten Schwellenwert SW3 übersteigt oder ansteigend durchschreitet, oder den vierten Schwellenwert SW4 unterschreitet oder abnehmend durchschreitet, wird ein weiteres einzelnes Triggersignal 48 erzeugt. Das neu erzeugte einzelne Triggersignal 48 wird insbesondere der Vielzahl von Triggersignalen 44 angefügt. Das dritte Diagramm zeigt die Vielzahl von Triggersignalen 44. Jeder Balken oder jedes Rechteck entspricht dabei einem einzelnen Triggersignal 48. Die Vielzahl von Triggersignalen 44 weist somit mehrere einzelne Triggersignale 48 auf. Jedes einzelne Triggersignal 48 kann einem Zahlenwert, häufig +1 oder -1 zugeordnet werden. Die Vielzahl von Triggersignalen 44 kann eine Abfolge solcher Zahlenwerte sein. Bevorzugt beinhaltet die Vielzahl von Triggersignalen 44 ausschließlich die Zahlenwerte +1 und -1. Mithilfe dieser unterschiedlichen Zahlenwerte können die unterschiedlichen Drehrichtungen repräsentiert werden.

Die Auswerteeinheit 70 kann das Umdrehungssignal 45 je nach Ausprägung des einzelnen Triggersignals 48 inkrementieren oder dekrementieren. Dies hängt bevorzugt von einer Polarität der Spannung ab, die an dem Gleichstrommotor 20 anliegt. Alternativ kann die Vielzahl von Triggersignalen 44 oder das dritte Nutzsignal 43 zeitlich integriert werden. Dazu kann eine numerische oder eine analytische Integration angewandt werden. Bevorzugt wird dabei eines der genannten Signale mittels einer mathematischen Funktion oder mehrerer Stützstellen approximiert. Im vierten Diagramm der Fig. 4 ist die das Umdrehungssignal 45 als Anzahl der Umdrehungen N dargestellt. Hier ist zu erkennen, dass das Umdrehungssignal 45 stetig ansteigt. Dies entspricht einer gleichmäßigen konstanten Drehung in eine Richtung.

Das erste Diagramm zeigt das Stromstärke-Signal 40, welches mit einer Abtastfrequenz von 2 Kilohertz generiert wurde. Bevorzugt ist jedoch vorgesehen, dass eine höhere Abtastfrequenz gewählt wird. Die Abtastfrequenz sollte in einem Bereich zwischen 5 kHz und 20 kHz, bevorzugt bei 10 kHz liegen.

Das zweite Diagramm in Fig. 4 zeigt das erste Nutzsignal 41, welches das Stromstärke-Signal 40 ist, das mittels des Hochpass-Filters 53 gefiltert wurde. In diesem Beispiel wird ein Hochpass erster Ordnung mit einer Eckfrequenz von 100 Hertz verwendet. Damit kann jener Anteil bezüglich der Spannkraft 57 in dem Stromstärke-Signal 40 minimiert werden. Anschließend kann durch die Auswerteeinheit 70 jedes Überschreiten, bevorzugt jedes ansteigende Durchschreiten des ersten Nutzsignals 41 über den ersten Schwellenwert SW1 in das einzelne Triggersignal 48 umgewandelt werden und der Vielzahl von Triggersignalen 44 angefügt oder hinzugefügt. Entsprechendes ist beim abfallenden Durchschreiten des zweiten Schwellenwerts SW2 durch das erste Nutzsignal 41 möglich.

Aus der bekannten Signalerfassung wie zum Beispiel der Raddrehzahlerfassung sind hinsichtlich der Erzeugung des Triggersignals 44 robuste Verfahren bekannt. Bevorzugt wird das Umdrehungssignal 45 basierend auf der Vielzahl von Triggersignalen 44 in Abhängigkeit der Drehrichtung inkrementiert oder dekrementiert. Die Drehrichtung lässt sich anhand der Polarität 51 der Spannung 50, der Stromstärke A und/oder des Stromstärke-Signals (40) ableiten. Somit wird das Umdrehungssignal 45 oder der dazugehörige Zähler 55 in Abhängigkeit von der Polarität 51 der Spannung 50 oder der Stromstärke A inkrementiert oder dekrementiert.

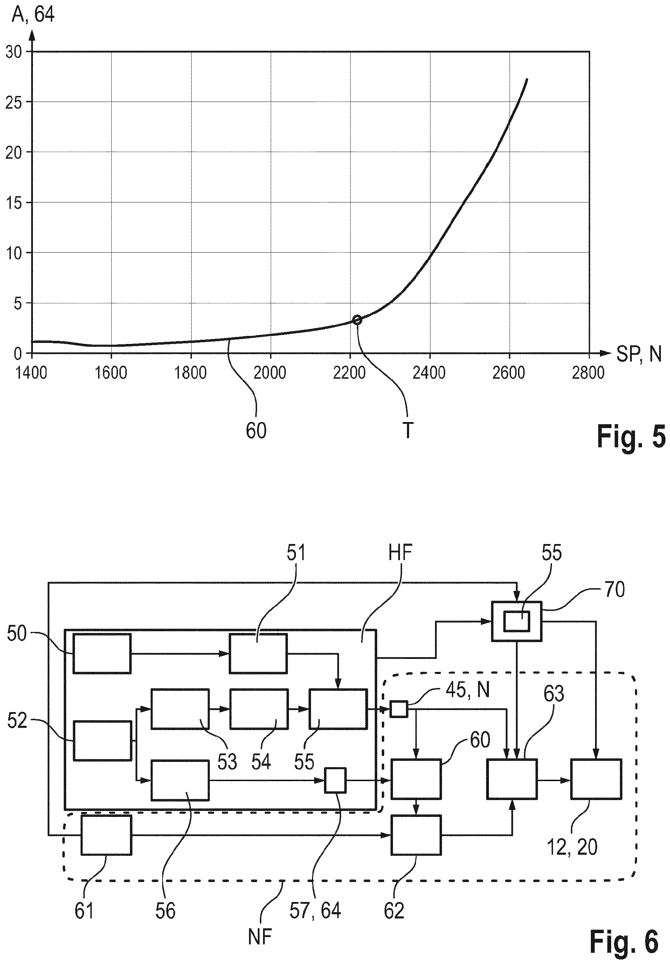

In Fig. 5 ist beispielhaft ein eine Kennlinie 60 dargestellt. Das erste Nutzsignal 41 repräsentiert aufgrund der Tiefpass-Filterung 56 des Stromstärke-Signals 40 die Spannkraft 57. Bei der Kennlinie 60 wird eine erfasste Anzahl von Umdrehungen N einem Motorstrom A zugeordnet. Im Fall der Kennlinie 60 würde die x-Achse somit die Anzahl der (Teil)-Umdrehungen N repräsentieren und die y-Achse würde das Stromstärke-Signal 40 bzw. die Zuspannkraft 64 oder die Spannkraft 57 darstellen. Anstelle des zeitlichen Verlaufs ist in Fig. 5 auf der x-Achse die Anzahl der Umdrehungen N in Form der Spitzen SP aufgetragen. Mithilfe einer solchen Darstellung kann besser auf einen Berührungspunkt T einer Bremsscheibe auf den Bremsbelag geschlossen werden. Im Bereich 1.400 bis 1.700 Peaks in Fig. 5 liegt die Stromstärke A in etwa bei 1 Ampere. Ab einer Umdrehungsanzahl von 1.700 steigt der Motorstrom A mit steigender Umdrehungsanzahl N kontinuierlich an. Dies bedeutet, dass bei dem Peakwert von etwa 1.700 der Bremsbelag auf die Bremsscheibe trifft. Dieser Punkt kann als sogenannter Touch-Punkt bezeichnet werden, die in Fig. 5 als kleiner Kreis dargestellt ist und den Berührungspunkt T repräsentiert. Ab diesem Berührungspunkt T beginnt eine elastische Belagskompression. Der so ermittelte Berührungspunkt T kann im Rahmen einer entsprechenden Regelung 63 für das Verfahren berücksichtigt werden. Insbesondere kann bei jedem Abstellen der elektrischen Bremse 12 eine Neuermittlung des Berührungspunktes T stattfinden.

In Fig. 6 ist beispielhaft eine Übersicht über ein mögliches Verfahren für die Erfindung gezeigt. In einem Hochfrequenzbereich HF wird das Stromstärke-Signal 40 mittels einer deutlich höheren Abtastfrequenz abgetastet als in einem niederfrequenten Bereich NF. Im niederfrequenten Bereich NF kommt im Beispiel von Fig. 6 eine Frequenz von 100 Hertz zum Einsatz. Die Spannung 50 weist die Polarität 51 auf. Die Polarität 51 bestimmt die Drehrichtung des Rotors 22 des Gleichstrommotors 20 der elektrischen Bremse 12. Das Stromstärke-Signal 40 kann mittels des Stromsensors 52 gemessen werden. Durch den Hochpass-Filter 53 sowie einen Trigger 54 können lokale Maxima 47 oder lokale Minima 46 des hochpassgefilterten Stromstärke-Signals 40 ermittelt werden. Das Stromstärke-Signal 40 entspricht nach dem Hochpass-Filter 53 dem ersten Nutzsignal 41. Mithilfe des Zählers 55 können die mehreren einzelnen Triggersignale 48 ausgewertet werden.

Diese Auswertung kann durch die Auswerteeinheit 70 erfolgen. Die Auswerteeinheit 70 kann den Zähler 55, den Trigger 54, den Hochpass-Filter 53 und/oder einen Tiefpass-Filter 56 aufweisen. Mithilfe des Zählers 55 kann auf die Anzahl von Umdrehungen N geschlossen werden. Das Umdrehungssignal 45 oder die Anzahl von Umdrehungen N können insbesondere als Motorwinkel oder Drehwinkel aufgefasst oder betrachtet werden. Der Zusammenhang tiefpassgefilterte Stromstärke A versus Anzahl der Umdrehungen N kann für eine vereinfachte Auswertung mittels Stützstellen approximiert werden. Für eine Approximation mittels Stützstellen ist es vorteilhaft, wenn der Kurvenverlauf streng monoton steigend ist.

Insbesondere kann die Kennlinie 60 bei erstmaliger Aktivierung der elektrischen Bremse 12, nach einem Bremsbelagwechsel oder bei jedem Parkieren neu kalibriert werden. Insbesondere kann eine Neukalibrierung der Kennlinie 60 bei einer Bremsbelagdicke, die einen vorgegebenen Wert unterschreitet, erfolgen. Bei der Kalibrierung der Kennlinie 60 kann die Anzahl der Umdrehungen N einer Stromstärke A und somit einer Kraft, zum Beispiel der Zuspannkraft 64 zugeordnet werden. Aus der übergeordneten Bremsregelung kann die Soll-Spannkraft 61 für die elektrische Bremse 12 bereitgestellt werden. Die aus der Kennlinie 60 abgeleitete Soll-Anzahl von Umdrehungen 62 kann mit der Anzahl an Umdrehungen N verglichen werden. Bei einer Abweichung, die größer als eine vorgegebene Toleranz ist, kann mittels der Regelung 63 die Anzahl der Umdrehungen N an die Soll-Anzahl von Umdrehungen 62 angepasst werden, insbesondere auf die Soll-Anzahl von Umdrehungen 62 eingeregelt werden.

Im Rahmen dieser Kalibrierung der Kennlinie 60 kann zwischen zwei vorgegebenen Punkten mit einer Anzahl vorgegebener Stützstellen approximiert werden. Die Kennlinie ist bevorzugt nicht-linear. Daher wird die Kennlinie 60 bevorzugt mittels mehrerer Stützstellen approximiert. Der erste Punkt entspricht dabei insbesondere jenem Punkt, der für eine Reibungsüberwindung notwendig ist. Der zweite Punkt oder letzte Punkt kann einer maximal möglichen Zuspannkraft 64 der elektrischen Bremse 12 entsprechen. Diese erforderliche Soll-Spannkraft 61 kann mittels des Reglers 63 mit der Anzahl von Umdrehungen N beziehungsweise mit der daraus abgeleiteten Bremskraft 64 verglichen werden. Bei einer entsprechenden Abweichung dieser beiden Signale erfolgt durch den Winkelregler 63 eine Ansteuerung der elektrischen Bremse 12 oder des Gleichstrommotors 20. Insbesondere wird der Gleichstrommotor 20 solange nachgeregelt, bis die Bremskraft 64 der Soll-Spannkraft 61 entspricht.

Mithilfe dieses Verfahrens kann auf einfache Art und Weise und ohne zusätzliche Kraftsensorik die Zuspannkraft 64 der elektrischen Bremse 12 ermittelt werden. Die so ermittelte Zuspannkraft 64 kann durch die Regelung 63 genutzt werden und hinsichtlich der Soll-Spannkraft 61 angepasst werden. Die dargestellten Möglichkeiten zum Bestimmen der Zuspannkraft 64 können in einem Ansteuerungsverfahren für elektrische Parkbremsen 12 genutzt werden. Dabei ergibt sich insbesondere der Vorteil, dass anstelle einer aufwendigen Spannkraftregelung, wozu eine Spannkraftmessung nötig ist, eine einfache Positionsregelung durchgeführt werden kann. Die Positionsregelung wird dabei bevorzugt mittels einer entsprechenden Auswertung des Stromstärke-Signals 40 durch die Auswerteeinheit 70 durchgeführt.

### Bezugszeichenliste

- 10: Kraftfahrzeug, Robotaxi
- 12: elektrische Bremse
- 20: Gleichstrommotor
- 21: Stator, Magnet
- 22: Rotor, Anker
- 23: Kommutator
- 24: Bürsten
- 25: Anschlussklemme
- 30: Wicklungen
- 31: Blechpaket
- 32: Welle
- 40: Stromstärke-Signal
- 41: erstes Nutzsignal
- 42: zweites Nutzsignal
- 43: drittes Nutzsignal
- 44: Vielzahl von Triggersignalen
- 45: Umdrehungssignal
- 46: lokale Minima
- 47: lokale Maxima
- 48: einzelnes Triggersignal
- SW1: erster Schwellenwert
- SW2: zweiter Schwellenwert
- SW3: dritter Schwellenwert
- SW4: vierter Schwellenwert
- A: Stromstärke
- SP: Spitzen, Spikes
- N: Anzahl von (Teil)-Umdrehungen
- 50: Spannung
- 51: Polarität
- 52: Stromsensor, Strommessung
- 53: Hochpass-Filter
- 54: Trigger
- 55: Zähler
- 56: Tiefpass-Filter
- 57: tiefpass-gefiltertes Stromstärke-Signal
- 61: Soll-Spannkraft
- 62: Soll-Anzahl von Umdrehungen
- 60: Kennlinie
- 63: Regelung
- 64: Zuspannkraft
- 70: Auswerteeinheit
- HF: Hochfrequenzbereich
- NF: Niederfrequenzbereich
- T: Berührungspunkt
- t: Zeit, Zeitverlauf

## Patentansprüche

1. Verfahren zum Bestimmen einer Zuspannkraft (64) einer elektrischen Bremse (12) aufweisend einen Gleichstrommotor (20) mit einer drehbaren Komponente mit folgenden Verfahrensschritten:
- Messen eines Stromstärke-Signals (40) des Gleichstrommotors (20) mit einer Abtastfrequenz von mindestens 2 Kilohertz,
- Generieren eines ersten Nutzsignals (41) durch Filtern des gemessenen Stromstärke-Signals (40) mittels eines Hochpass-Filters (53),
- Erzeugen einer Vielzahl von Triggersignalen (44), wenn das erste Nutzsignal (41) jeweils einen ersten Schwellenwert (SW1) ansteigend durchschreitet und/oder das erste Nutzsignal einen zweiten Schwellenwert (SW2) abnehmend durchschreitet,
- Inkrementieren oder Dekrementieren eines Umdrehungssignals (45) in Abhängigkeit von der Vielzahl von Triggersignalen (44) und/oder zeitliches Integrieren der Vielzahl von Triggersignalen (44), um eine Anzahl von Umdrehungen (N) der drehbaren Komponente (22, 23) des Gleichstrommotors (20) der elektrischen Bremse (12) zu erhalten,
- Ermitteln der Zuspannkraft (64) in Abhängigkeit von der Anzahl von Umdrehungen (N) und/oder von dem Umdrehungssignal (45).

2. Verfahren nach Anspruch 1, wobei ein zweites Nutzsignal (42) durch Filtern des gemessenen Stromstärke-Signals (40) mittels eines Tiefpass-Filters (56) generiert wird und basierend auf dem zweiten Nutzsignal (56) eine Zuspannkraft (57) der elektrischen Bremse (12) ermittelt wird.

3. Verfahren nach Anspruch 2, wobei ein drittes Nutzsignal (43) in Abhängigkeit von dem ersten und zweiten Nutzsignal (41, 42) ermittelt wird, insbesondere das dritte Nutzsignal (43) durch eine Subtraktion des zweiten Nutzsignals (42) vom ersten Nutzsignal (41) bestimmt wird, und das dritte Nutzsignal (43) zum Erzeugen der Vielzahl von Triggersignalen (44) verwendet wird.

4. Verfahren nach einem der vorhergehenden Ansprüche, wobei das Umdrehungssignal (45) nur dann inkrementiert wird, wenn nach einem früheren Inkrementieren das erste Nutzsignal (41) und/oder das dritte Nutzsignal (43) wenigstens einen negativen Wert aufweist, insbesondere ein zeitlicher Verlauf des dritten Nutzsignals (43) abwechselnd positive lokale Maxima (47) und negative lokale Minima (46) aufweist.

5. Verfahren nach einem der vorhergehenden Ansprüche, wobei für das Erzeugen der Vielzahl von Triggersignalen (44) jeweils ein einzelnes Triggersignal (48) nur dann erzeugt wird, wenn dem einzelnen Triggersignal (48) genau ein ansteigendes Durchschreiten des ersten Nutzsignals (41) durch den ersten Schwellenwert (SW1) und/oder des dritten Nutzsignals (43) durch einen dritten Schwellenwert (SW3) zugeordnet werden kann,
und/oder das einzelne Triggersignal (48) nur dann erzeugt wird, wenn dem einzelnen Triggersignal (48) genau ein abfallendes Durchschreiten des ersten Nutzsignals (41) durch den zweiten Schwellenwert (SW2) und/oder des dritten Nutzsignals (43) durch einen vierten Schwellenwert (SW4) zugeordnet werden kann.

6. Verfahren nach einem der vorhergehenden Ansprüche, wobei für das Inkrementieren jeweils ein positiver Wert für ein einzelnes Triggersignal (48) für die Vielzahl von Triggersignalen (44) erzeugt wird, wenn die an dem Gleichstrommotor (20) anliegende Spannung (50) oder das gemessene Stromstärke-Signal (40) positiv ist und für das Dekrementieren jeweils ein negativer Wert für das einzelne Triggersignal (48) für die Vielzahl von Triggersignalen (44) erzeugt wird, wenn die an dem Gleichstrommotor (20) anliegende Spannung (50) oder das gemessene Stromstärke-Signal (40) negativ ist.

7. Verfahren nach einem der vorhergehenden Ansprüche, wobei für das Inkrementieren ein erstes Teiltriggersignal erzeugt wird, wenn jeweils ein Wert des ersten Nutzsignals (41) den ersten Schwellenwert (SW1) ansteigend durchschreitet, und ein zweites Teiltriggersignal erzeugt wird, wenn jeweils ein Wert des ersten Nutzsignals (41) einen zweiten Schwellenwert (SW2) fallend durchschreitet.

8. Verfahren nach einem der vorhergehenden Ansprüche, wobei das Stromstärke-Signal (40) zum Messen einer Stromstärke (A) des Gleichstrommotors (20) zwischen 5 kHz und 20 kHz, bevorzugt mit 10 kHz Abtastfrequenz abgetastet wird.

9. Verfahren nach einem der vorhergehenden Ansprüche, wobei eine Kennlinie (60) aus der Anzahl von Umdrehungen (N) oder aus dem Umdrehungssignal (45) sowie dem Stromstärke-Signal (40) oder dem zweiten Nutzsignal (42) gebildet wird, und
aus einer vorgegebenen Soll-Bremskraft (61) eine Soll-Anzahl von Umdrehungen (62)
mittels der Kennlinie (60) bestimmt wird und die Anzahl der Umdrehungen (N) auf die Soll-Anzahl von Umdrehungen (62) eingeregelt wird.

10. Verfahren nach Anspruch 9, wobei die Kennlinie (60) vorgeben wird und/oder nach jedem Bremsbelagwechsel und/oder nach jeder maximal möglichen Bremsbetätigung der elektrischen Bremse (12) neu kalibriert wird.

11. Verfahren nach einem der Ansprüche 2 bis 10, wobei mittels des zweiten Nutzsignals (42) ein Berührungspunkt (T) eines Bremsbelags ermittelt wird, indem insbesondere der Berührungspunkt (T) durch einen Anstieg der Zuspannkraft (57) um ein vorgegebenes Niveau festgestellt wird.

12. Verfahren nach Anspruch 11, wobei der Berührungspunkt (T) regelmäßig neu festgestellt wird und daraus ein Verschleißsignal der elektrischen Bremse (12) gewonnen wird.

13. Elektrischen Bremse (12) aufweisend
- einem Gleichstrommotor (20) mit einer drehbaren Komponente (22, 23) zum Betreiben der elektrischen Bremse (12),
- einem Stromsensor (52) zum Messen eines Stromstärke-Signals (40) des Gleichstrommotors (20) mit einer Abtastfrequenz von mindestens 2 Kilohertz,
- einem Hochpass-Filter (53) zum Generieren eines ersten Nutzsignals (41) durch Filtern des gemessenen Stromstärke-Signals (40),
- einer Auswerteeinheit (70), welche eingerichtet ist,
∘ eine Vielzahl von Triggersignalen (44) zu erzeugen, wenn das erste Nutzsignal (41) jeweils einen ersten Schwellenwert (SW1) ansteigend durchschreitet und/oder das erste Nutzsignal (41) einen zweiten Schwellenwert (SW2) abnehmend durchschreitet,
∘ ein Umdrehungssignal (45) in Abhängigkeit von der Vielzahl von Triggersignalen (44) zu inkrementieren oder dekrementieren und/oder die Vielzahl von Triggersignalen (44) zeitlich zu integrieren, um eine Anzahl von Umdrehungen (N) der drehbaren Komponente (22, 23) der elektrischen Bremse (12) zu erhalten, und
∘ eine Zuspannkraft (64) in Abhängigkeit von der Anzahl von Umdrehungen (N) und/oder von dem Umdrehungssignal (45) zu ermitteln.

14. Elektrische Bremse (12) nach Anspruch 13 mit einem Trigger (54), wobei der Hochpass-Filter (53) und/oder der Trigger (54) analog und/oder digital ausgebildet sind und die Auswerteeinheit (70) bevorzugt einen Zähler (55) zum Erzeugen des Umdrehungssignals (45) beinhaltet.

15. Kraftfahrzeug (10) mit einer elektrischen Bremse (12) nach einem der Ansprüche 13 oder 14.
